(19) Europäisches Patentamt
European Patent Office
Office européen des brevets

(11) **EP 3 444 633 A1**

(12) **EUROPÄISCHE PATENTANMELDUNG**

(43) Veröffentlichungstag:
**20.02.2019 Patentblatt 2019/08**

(51) Int Cl.:
**G01S 15/10** *(2006.01)* **G01S 15/93** *(2006.01)*
**G01S 7/524** *(2006.01)*

(21) Anmeldenummer: **18188809.0**

(22) Anmeldetag: **14.08.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **18.08.2017 DE 102017118883**

(71) Anmelder: **Valeo Schalter und Sensoren GmbH**
**74321 Bietigheim-Bissingen (DE)**

(72) Erfinder:
• **Bariant, Jean-Francois**
**74321 Bietigheim-Bissingen (DE)**
• **Baicry, Mathieu**
**74321 Bietigheim-Bissingen (DE)**
• **Thomen, Matthias**
**74321 Bietigheim-Bissingen (DE)**

(54) **VERFAHREN ZUM BETREIBEN EINER ULTRASCHALLSENSORVORRICHTUNG FÜR EIN KRAFTFAHRZEUG MIT ANPASSUNG EINES ZEITLICHEN VERLAUFS EINER AMPLITUDE BEI FREQUENZMODULIERTEN ANREGUNGSSIGNALEN**

(57) Die Erfindung betrifft ein Verfahren zum Betreiben einer Ultraschallsensorvorrichtung (3) für ein Kraftfahrzeug (1), bei welchem eine Membran eines ersten Ultraschallsensors (4a) zum Aussenden eines ersten Ultraschallsignals mit einem frequenzmodulierten ersten Anregungssignal (10a) angeregt wird und eine Membran eines zweiten Ultraschallsensors (4b) zum Aussenden eines zweiten Ultraschallsignals mit einem frequenzmodulierten zweiten Anregungssignal angeregt wird, wobei die Membran des ersten Ultraschallsensors (4a) und des zweiten Ultraschallsensors (4b) die gleiche Resonanzfrequenz (fR) aufweisen, wobei das erste Anregungssignal (10a) einen ersten Frequenzbereich (fa) umfasst und das zweite Anregungssignal einen von dem ersten Frequenzbereich (fa) verschieden, zweiten Frequenzbereich (fb) umfasst, wobei ein zeitlicher Verlauf einer maximalen Amplitude (Am) des ersten Anregungssignals (10a) und ein zeitlicher Verlauf einer maximalen Amplitude (Am) des zweiten Anregungssignals verändert werden.

Fig.4

EP 3 444 633 A1

**Beschreibung**

Die vorliegende Erfindung betrifft ein Verfahren zum Betreiben einer Ultraschallsensorvorrichtung für ein Kraftfahrzeug, bei welchem eine Membran eines ersten Ultraschallsensors zum Aussenden eines ersten Ultraschallsignals mit einem frequenzmodulierten ersten Anregungssignal angeregt wird und eine Membran eines zweiten Ultraschallsensors zum Aussenden eines zweiten Ultraschallsignals mit einem frequenzmodulierten zweiten Anregungssignal angeregt wird, wobei die Membran des ersten Ultraschallsensors und die Membran des zweiten Ultraschallsensors die gleiche Resonanzfrequenz aufweisen. Darüber hinaus betrifft die vorliegende Erfindung eine Ultraschallsensorvorrichtung sowie ein Fahrerassistenzsystem. Schließlich betrifft die vorliegende Erfindung ein Kraftfahrzeug.

Das Interesse richtet sich vorliegend auf Ultraschallsensorvorrichtungen für Kraftfahrzeuge. Derartige Ultraschallsensorvorrichtungen können beispielsweise dazu verwendet werden, ein Objekt in einem Umgebungsbereich des Kraftfahrzeugs zu erfassen. Eine solche Ultraschallsensorvorrichtung umfasst üblicherweise mehrere Ultraschallsensoren, mit denen jeweils ein Abstand zu dem Objekt bestimmt werden kann. Die Ultraschallsensoren umfassen eine Membran, die zum Aussenden des Ultraschallsignals mit einem entsprechenden Wandlerelement zu mechanischen Schwingungen angeregt wird. Das von dem Ultraschallsensor ausgesendete Ultraschallsignal wird dann von dem Objekt reflektiert und trifft wieder auf die Membran des Ultraschallsensors auf. Hierdurch wird die Membran zu mechanischen Schwingungen angeregt, welche mit dem Wandlerelement erfasst werden können und in Form eines Sensorsignals bereitgestellt werden können.

Aus dem Stand der Technik sind Ultraschallsensorvorrichtungen beziehungsweise Fahrerassistenzsysteme bekannt, bei denen an einem Stoßfänger des Kraftfahrzeugs bis zu sechs Ultraschallsensoren angeordnet sind. Ferner ist es bekannt, dass mit den einzelnen Ultraschallsensoren nacheinander eine Messung durchgeführt wird, um eine Beeinflussung der Ultraschallsensoren untereinander zu vermeiden. Da die Ultraschallsensoren das jeweilige Ultraschallsignal nicht zum gleichen Zeitpunkt aussenden, wird eine verhältnismäßig lange Zeit für einen Messzyklus mit den Ultraschallsensoren benötigt. Um die Dauer eines solchen Messzyklus zu reduzieren, ist es aus dem Stand der Technik bekannt, die Ultraschallsignale, die mit den einzelnen Ultraschallsensoren ausgesendet werden, entsprechend zu codieren. Hierzu beschreibt die DE 10 2011 120 447 A1 ein Verfahren zum Betreiben eines Ultraschallsensors eines Kraftfahrzeugs. Hierbei wird ein Sendesignal durch den Ultraschallsensor ausgesendet, wobei das Sendesignal derart in seiner Phase moduliert wird, dass es Phasensprünge aufweist. Es erfolgt also eine PSK-Modulation des Sendesignals.

Darüber hinaus ist es aus dem Stand der Technik bekannt, dass ein Anregungssignal, mit dem der Ultraschallsensor beziehungsweise dessen Wandlerelement angeregt wird, ein frequenzmoduliertes Signal ist. In diesem Zusammenhang beschreibt die DE 10 2013 211 846 A1 ein Verfahren zum Betrieb eines Umfelderfassungssystems eines Fahrzeugs. Hierbei wird mit einer Sende- und Empfangseinheit ein frequenzmoduliertes Signal ausgesendet und die Sende- und/oder Empfangseinheit und/oder eine oder mehrere weitere Sende- und/oder Empfangseinheiten empfangen Echosignale des ausgesendeten frequenzmodulierten Signals. Bei dem frequenzmodulierten Signal kann es sich um ein Chirpsignal handeln.

Es ist Aufgabe der vorliegenden Erfindung, eine Lösung aufzuzeigen, wie mit einer Ultraschallsensorvorrichtung für ein Kraftfahrzeug mit mehreren Ultraschallsensoren ein Umgebungsbereich eines Kraftfahrzeugs sicherer und zuverlässiger erfasst werden kann.

Diese Aufgabe wird erfindungsgemäß durch ein Verfahren, durch eine Ultraschallsensorvorrichtung, durch ein Fahrerassistenzsystem sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche.

Bei einer Ausführungsform eines Verfahrens zum Betreiben einer Ultraschallsensorvorrichtung für ein Kraftfahrzeug wird eine Membran eines ersten Ultraschallsensors zum Aussenden eines ersten Ultraschallsignals bevorzugt mit einem frequenzmodulierten ersten Anregungssignal angeregt. Darüber hinaus wird eine Membran eines zweiten Ultraschallsensors zum Aussenden eines zweiten Ultraschallsignals insbesondere mit einem frequenzmodulierten zweiten Anregungssignal angeregt. Dabei ist es insbesondere vorgesehen, dass die Membran des ersten Ultraschallsensors und die Membran des zweiten Ultraschallsensors die gleiche Resonanzfrequenz aufweisen. Zudem ist es bevorzugt vorgesehen, dass das erste Anregungssignal einen ersten Frequenzbereich umfasst und das zweite Anregungssignal einen von dem ersten Frequenzbereich verschiedenen, zweiten Frequenzbereich umfasst. Darüber hinaus ist es insbesondere vorgesehen, dass ein zeitlicher Verlauf einer maximalen Amplitude des ersten Anregungssignals und ein zeitlicher Verlauf einer maximalen Amplitude des zweiten Anregungssignals verändert werden.

Ein erfindungsgemäßes Verfahren dient zum Betreiben einer Ultraschallsensorvorrichtung für ein Kraftfahrzeug. Dabei wird eine Membran eines ersten Ultraschallsensors zum Aussenden eines ersten Ultraschallsignals mit einem frequenzmodulierten ersten Anregungssignal angeregt und eine Membran eines zweiten Ultraschallsensors wird zum Aussenden eines zweiten Ultraschallsignals mit einem frequenzmodulierten zweiten Anregungssignal angeregt, wobei die Membran des ersten Ultraschallsensors und die Membran des zweiten Ultraschallsensors die gleiche Resonanzfrequenz aufweisen. Dabei umfasst das erste Anregungssignal einen ersten Frequenzbereich und das zweite Anregungssignal umfasst einen von dem ersten Frequenzbereich verschiedenen, zweiten Frequenzbereich. Zudem werden insbesondere ein zeitlicher Verlauf einer maximalen Amplitude des ersten Anregungssignals und ein zeitlicher Verlauf einer maximalen Amplitude des zweiten Anregungssignals verändert.

Mithilfe des Verfahrens soll eine Ultraschallsensorvorrichtung für ein Kraftfahrzeug betrieben werden. Die Ultraschallsensorvorrichtung umfasst den ersten Ultraschallsensor und den zweiten Ultraschallsensor. Dabei ist es insbesondere vorgesehen, dass der erste Ultraschallsensor und der zweite Ultraschallsensor baugleich ausgebildet sind. Es kann auch vorgesehen sein, dass die Ultraschallsensorvorrichtung mehrere Ultraschallsensoren umfasst. Mithilfe der Ultraschallsensorvorrichtung können Objekte beziehungsweise Hindernisse in einem Umgebungsbereich des Kraftfahrzeugs erfasst werden. Hierzu kann mit den Ultraschallsensoren jeweils ein Ultraschallsignal ausgesendet werden. Vorliegend wird mit dem ersten Ultraschallsensor das erste Ultraschallsignal ausgesendet und mit dem zweiten Ultraschallsensor wird das zweite Ultraschallsignal ausgesendet. Zu diesem Zweck wird die Membran des jeweiligen Ultraschallsensors mit einem entsprechenden Wandlerelement, beispielsweise einem piezoelektrischen Element, zu mechanischen Schwingungen angeregt. Zu diesem Zweck kann das jeweilige Wandlerelement mit einem Anregungssignal in Form einer zeitlich veränderlichen elektrischen Spannung beaufschlagt werden. Das jeweils ausgesendete Ultraschallsignal wird dann an dem Objekt in dem Umgebungsbereich des Kraftfahrzeugs reflektiert und trifft wieder auf die Membran des Ultraschallsensors. Dadurch wird die Membran des Ultraschallsensors zu mechanischen Schwingungen angeregt. Diese mechanischen Schwingungen der Membran können mit dem Wandlerelement erfasst werden und in Form eines Sensorsignals beziehungsweise Rohsignals, welches insbesondere als zeitlich veränderliche elektrische Spannung bereitgestellt wird, ausgegeben werden.

Gemäß einem wesentlichen Aspekt der vorliegenden Erfindung ist es vorgesehen, dass die Membran des ersten Ultraschallsensors mit dem ersten Anregungssignal in dem ersten Frequenzbereich angeregt wird und dass die Membran des zweiten Ultraschallsensors mit dem zweiten Anregungssignal in dem zweiten Frequenzbereich angeregt wird. Die jeweiligen Anregungssignale werden dabei als frequenzmodulierte Signale bereitgestellt. Dies bedeutet, dass sich die Frequenz der jeweiligen Anregungssignale in Abhängigkeit von der Zeit verändert. Des Weiteren ist es vorgesehen, dass sich der erste Frequenzbereich des ersten Anregungssignals von dem zweiten Frequenzbereich des zweiten Anregungssignals unterscheidet. Dies bedeutet insbesondere, dass der erste Frequenzbereich und der zweite Frequenzbereich keine Überschneidungen aufweisen.

Wie bereits erläutert, sind die Ultraschallsensoren baugleich ausgebildet. Dies bedeutet auch, dass die Membran des ersten Ultraschallsensors und des zweiten Ultraschallsensors baugleich ausgebildet sind. Die Membranen weisen unter Berücksichtigung von fertigungstechnischen Toleranzen die gleiche Resonanzfrequenz auf. Dadurch, dass die Membran des ersten Ultraschallsensors in dem ersten Frequenzbereich angeregt wird und die Membran des zweiten Ultraschallsensors in dem zweiten Frequenzbereich angeregt wird, können das erste und das zweite Ultraschallsignal beim nachfolgenden Empfangen voneinander unterschieden werden. Somit ist es insbesondere nicht erforderlich, verschiedene Ultraschallsensoren zu verwenden, deren Membrane unterschiedliche Resonanzfrequenzen aufweisen. So kann auf einfache und kostengünstige Weise erreicht werden, dass die Signale des ersten Ultraschallsensors und des zweiten Ultraschallsensors voneinander unterschieden werden können. Dies eignet sich insbesondere, wenn der erste Ultraschallsensor und der zweite Ultraschallsensor nebeneinander an einem Stoßfänger des Kraftfahrzeugs angeordnet werden sollen und somit eine gegenseitige Beeinflussung vorliegen kann.

Der vorliegenden Erfindung liegt weiterhin die Erkenntnis zugrunde, dass beim Aussenden des ersten Ultraschallsignals und des zweiten Ultraschallsignals Überschneidungen im Frequenzbereich auftreten können. Wie bereits erläutert, unterscheiden sich die Frequenzbereiche der beiden frequenzmodulierten Anregungssignale. Diese Anregungssignale weisen aber graduell steigende und fallende Flanken auf, wodurch die Bandbreite der ausgesendeten Ultraschallsignale in dem Frequenzbereich über ihren eigentlichen Frequenzbereich hinaus verbreitert werden. Dies kann dazu führen, dass sich die Ultraschallsignale im Frequenzbereich überlagern und somit eine Beeinflussung stattfindet. Dies wird vorliegend dadurch verhindert, dass der zeitliche Verlauf der jeweiligen maximalen Amplituden der Anregungssignale verändert wird. Dabei beschreibt die maximale Amplitude diejenige Amplitude, welche das jeweilige Anregungssignal maximal annehmen kann. Bei dem jeweiligen Anregungssignal handelt es sich um ein zeitlich veränderliches Signal. Die maximale Amplitude kann daher eine Einhüllende beziehungsweise Hüllkurve des jeweiligen Anregungssignals beschreiben. Hierbei ist es insbesondere vorgesehen, dass die maximalen Amplituden der Anregungssignale während des Aussendens so beeinflusst werden, dass sich im Frequenzbereich eine möglichst geringe Überschneidung zwischen dem ersten Ultraschallsignal und dem zweiten Ultraschallsignal ergibt. Weiter ist es insbesondere nicht erforderlich, dass der erste Frequenzbereich und der zweite Frequenzbereich angepasst beziehungsweise weiter voneinander verschoben werden, wodurch die Sendeenergie reduziert wird. Des Weiteren ist es nicht erforderlich, die jeweiligen Frequenzbereiche schmaler zu gestalten, wodurch die Auflösung, welche erreicht werden kann, reduziert wird. Somit kann insgesamt ein effizienter und zuverlässiger Betrieb der Ultraschallsensorvorrichtung ermöglicht werden.

Bevorzugt werden das erste Anregungssignal und das zweite Anregungssignal als Chirp bereitgestellt. Wie bereits erläutert, ändert sich bei dem ersten Anregungssignal und dem zweiten Anregungssignal die Frequenz in Abhängigkeit von der Zeit. Dabei kann es ferner vorgesehen sein, dass der erste Frequenzbereich unterhalb der Resonanzfrequenz liegt und der zweite Frequenzbereich oberhalb der Resonanzfrequenz liegt. Das erste Anregungssignal, welches unterhalb der Resonanzfrequenz liegt, kann ein positiver Chirp sein. Hierbei kann sich die Frequenz des Signals in Abhängigkeit von der Zeit erhöhen. Das zweite Anregungssignal, welches oberhalb der Resonanzfrequenz liegt, kann ein negativer Chirp sein, bei welchem die Frequenz in Abhängigkeit von der Zeit abnimmt. Durch eine entsprechende Anpassung des zeitlichen Verlaufs der maximalen Amplituden der Anregungssignale kann erreicht werden, dass diese eindeutig voneinander unterschieden werden können.

Gemäß einer Ausführungsform erstrecken sich das erste Anregungssignal und das zweite Anregungssignal jeweils von einem steigenden Abschnitt zu einem fallenden Abschnitt, welcher der Resonanzfrequenz zugeordnet ist, wobei die maximale Amplitude des ersten Anregungssignals und die maximale Amplitude des zweiten Anregungssignals in dem fallenden Abschnitt reduziert werden. Mit anderen Worten kann der zeitliche Verlauf der maximalen Amplitude des ersten Anregungssignals und des zweiten Anregungssignals an den jeweiligen fallenden Abschnitt angepasst werden. In dem fallenden Abschnitt können die maximalen Amplituden eine vorbestimmte Steigung oder Flankensteilheit aufweisen. Der steigende Abschnitt des Anregungssignals kann einer Anfangsfrequenz des Anregungssignals zugeordnet sein und der fallende Abschnitt kann einer Endfrequenz des Anregungssignals zugeordnet sein. Dieser jeweilige fallende Abschnitt der Anregungssignale ist der Resonanzfrequenz und somit einem möglichen Überlagerungsbereich der Anregungssignale zugeordnet. Durch die Anpassung des zeitlichen Verlaufs der maximalen Amplitude in diesem fallenden Abschnitt kann verhindert werden, dass die jeweiligen Anregungssignale im Bereich der Resonanzfrequenz verhältnismäßig flache Flanken aufweisen. Insbesondere kann es vorgesehen sein, dass in dem fallenden Abschnitt die maximale Amplitude so angepasst wird, dass die Flanke im Vergleich zu dem reinen frequenzmodulierten Anregungssignal steiler wird. Somit kann eine Überschneidung der Anregungssignale im Frequenzbereich verhindert werden.

In einer weiteren Ausführungsform werden die maximale Amplitude des ersten Anregungssignals und die maximale Amplitude des zweiten Anregungssignals in dem steigenden Abschnitt reduziert. Auch in dem steigenden Abschnitt kann der zeitliche Verlauf der maximalen Amplitude angepasst werden. Dieser steigende Abschnitt liegt beim Beginn des Aussendens der jeweiligen Anregungssignale vor. Dieser steigende Abschnitt beschreibt den Frequenzbereich der Anregungssignale, welcher am weitesten von der Resonanzfrequenz entfernt ist. Somit kann auch hier verhindert werden, dass sich das jeweilige Ultraschallsignal im Frequenzbereich verbreitert.

Gemäß einer weiteren Ausführungsform beschreiben der zeitliche Verlauf der maximalen Amplitude des ersten Anregungssignals und der maximalen Amplitude des zweiten Anregungssignals in dem fallenden Abschnitt und/oder in dem steigenden Abschnitt eine Sigmoidfunktion. Eine solche Sigmoidfunktion weist einen S-förmigen Verlauf auf. Dies bedeutet, dass der zeitliche Verlauf der maximalen Amplitude in dem steigenden Abschnitt zunächst entlang dieser S-Funktion erhöht wird und am Ende des Anregungssignals entlang einer umgekehrten S-Funktion reduziert wird. Zwischen dem steigenden Abschnitt und dem fallenden Abschnitt kann die maximale Amplitude der jeweiligen Anregungssignale einen konstanten Wert aufweisen beziehungsweise einer linearen Funktion entsprechen. Grundsätzlich kann ein derartiger Verlauf mithilfe einer entsprechenden Fensterfunktion ermöglicht werden. Beispielsweise kann diese Fensterfunktion so ausgebildet sein, dass diese durch eine Kombination von zwei Sigmoidfunktionen gebildet wird, welche sich bei der Hälfte der Sendedauer des jeweiligen Anregungssignals überschneidet. Grundsätzlich können auch andere Funktionen beziehungsweise Fensterfunktionen verwendet werden. Beispiele hierfür sind Hanning-Fenster, Blackman-Fenster, Tukey-Fenster oder dergleichen. Dies ermöglicht insbesondere eine einfache und zuverlässige Anpassung des zeitlichen Verlaufs der maximalen Amplituden.

Weiterhin ist es vorteilhaft, wenn die Membran des ersten Ultraschallsensors und die Membran des zweiten Ultraschallsensors gleichzeitig angeregt werden. Dies bedeutet, dass das erste Ultraschallsignal und das zweite Ultraschallsignal zeitgleich ausgesendet werden. Das erste Ultraschallsignal, das mit dem ersten Ultraschallsensor ausgesendet wird, kann von einem Objekt in dem Umgebungsbereich des Kraftfahrzeugs reflektiert werden. Im Anschluss daran kann das erste Ultraschallsignal wieder mit dem ersten Ultraschallsensor empfangen werden. Es kann auch eine sogenannte Kreuzmessung durchgeführt werden, bei welcher das erste Ultraschallsignal mit dem zweiten Ultraschallsensor empfangen wird. In gleicher Weise kann das zweite Ultraschallsignal, welches mit dem zweiten Ultraschallsensor ausgesendet wird, sowohl mit dem zweiten Ultraschallsensor, als auch mit dem ersten Ultraschallsensor empfangen werden. Da das erste Ultraschallsignal und das zweite Ultraschallsignal aufgrund ihrer verschiedenen Frequenzbereiche beim Empfangen voneinander unterschieden werden können, können das erste Ultraschallsignal und das zweite Ultraschallsignal zeitgleich ausgesendet werden. Somit kann beispielsweise ein Messzyklus, der mit der Ultraschallsensorvorrichtung durchgeführt wird, innerhalb einer kürzeren Zeit erfolgen. Dies ermöglicht eine zuverlässige Überwachung des Umgebungsbereichs des Kraftfahrzeugs.

In einer weiteren Ausgestaltung wird das von einem Objekt in einem Umgebungsbereich des Kraftfahrzeugs reflektierte erste Ultraschallsignal und/oder zweite Ultraschallsignal mit dem ersten Anregungssignal und/oder dem zweiten Anregungssignal korreliert. Wie bereits erläutert, kann mit dem ersten Ultraschallsensor sowohl das erste als auch das zweite reflektierte Ultraschallsignal empfangen werden. Um zu überprüfen, ob das empfangene Ultraschallsignal das erste Ultraschallsignal oder das zweite Ultraschallsignal beschreibt, kann das empfangene Ultraschallsignal mit dem ersten Anregungssignal und/oder dem zweiten Anregungssignal korreliert werden. Es wird also die Übereinstimmung des empfangenen Ultraschallsignals mit einem der Anregungssignale überprüft. Dies kann in gleicher Weise für den zweiten Ultraschallsensor durchgeführt werden. Somit ist es beispielsweise nicht erforderlich, dass das empfangene Ultraschallsignal entsprechend gefiltert wird.

In einer weiteren Ausführungsform wird zusätzlich zumindest eine Membran eines dritten Ultraschallsensors zum Aussenden eines dritten Ultraschallsignals mit einem frequenzmodulierten dritten Anregungssignal angeregt. Mit anderen Worten kann das Verfahren grundsätzlich auf mehrere Ultraschallsensoren beziehungsweise Kanäle erweitert werden. Dabei kann jedem Ultraschallsensor ein definierter Frequenzbereich zugeordnet werden.

Eine erfindungsgemäße Ultraschallsensorvorrichtung für ein Kraftfahrzeug umfasst einen ersten Ultraschallsensor und einen zweiten Ultraschallsensor. Dabei ist die Ultraschallsensorvorrichtung bevorzugt zum Durchführen eines erfindungsgemäßen Verfahrens und der vorteilhaften Ausgestaltungen davon ausgelegt. Wie bereits erläutert, kann die Ultraschallsensorvorrichtung auch mehrere Ultraschallsensoren umfassen. Darüber hinaus kann die Ultraschallsensorvorrichtung ein elektronisches Steuergerät umfassen, welches zur Datenübertragung mit den Ultraschallsensoren verbunden ist. Mit diesem Steuergerät kann das jeweilige Anregungssignal an die Ultraschallsensoren beziehungsweise deren Wandlerelemente übertragen werden. Darüber hinaus kann mit den jeweiligen Ultraschallsensoren beim Empfangen das Sensorsignal beziehungsweise das Rohsignal an das Steuergerät übertragen werden.

Ein erfindungsgemäßes Fahrerassistenzsystem für ein Kraftfahrzeug umfasst eine erfindungsgemäße Ultraschallsensorvorrichtung. Grundsätzlich können mithilfe des Fahrerassistenzsystems Objekte in dem Umgebungsbereich des Kraftfahrzeugs erkannt werden. Falls erkannt wird, dass eine Kollision zwischen dem Kraftfahrzeug und dem Objekt droht, kann eine entsprechende Warnung an den Fahrer ausgegeben werden. Es kann auch vorgesehen sein, dass das Fahrerassistenzsystem das Kraftfahrzeug in Abhängigkeit von der relativen Lage zwischen dem Kraftfahrzeug und dem Objekt zumindest semi-autonom manövriert. Beispielsweise kann das Fahrerassistenzsystem als Parkhilfesystem ausgebildet sein.

Ein erfindungsgemäßes Kraftfahrzeug umfasst ein erfindungsgemäßes Fahrerassistenzsystem. Das Kraftfahrzeug ist insbesondere als Personenkraftwagen ausgebildet. Es kann auch vorgesehen sein, dass das Kraftfahrzeug als Nutzfahrzeug ausgebildet ist.

Die mit Bezug auf das erfindungsgemäße Verfahren vorgestellten bevorzugten Ausführungsformen und deren Vorteile gelten entsprechend für die erfindungsgemäße Ultraschallsensorvorrichtung, für das erfindungsgemäße Fahrerassistenzsystem sowie für das erfindungsgemäße Kraftfahrzeug.

Weitere Merkmale der Erfindung ergeben sich aus den Ansprüchen, den Figuren und der

Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den

Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Die Erfindung wird nun anhand von bevorzugten Ausführungsbeispielen sowie unter Bezugnahme auf die beigefügten Zeichnungen näher erläutert.

Dabei zeigen:

Fig. 1     ein Kraftfahrzeug gemäß einer Ausführungsform der Erfindung, welches ein Fahrerassistenzsystem mit einer Ultraschallsensorvorrichtung aufweist;

Fig. 2     einen zeitlichen Verlauf eines Anregungssignals, mit welchem ein Ultraschallsensor zum Aussenden eines Ultraschallsignals angeregt wird, gemäß dem Stand der Technik;

Fig. 3     Frequenzspektren eines ersten Ultraschallsignals und eines zweiten Ultraschallsignals gemäß dem Stand der Technik;

Fig. 4 einen zeitlichen Verlauf eines Anregungssignals für einen Ultraschallsensor gemäß einer Ausführungsform der Erfindung; und

Fig. 5 Frequenzspektren eines ersten Ultraschallsignals und eines zweiten Ultraschallsignals gemäß einer Ausführungsform der Erfindung.

In den Figuren werden gleiche oder funktionsgleiche Elemente mit den gleichen Bezugszeichen versehen.

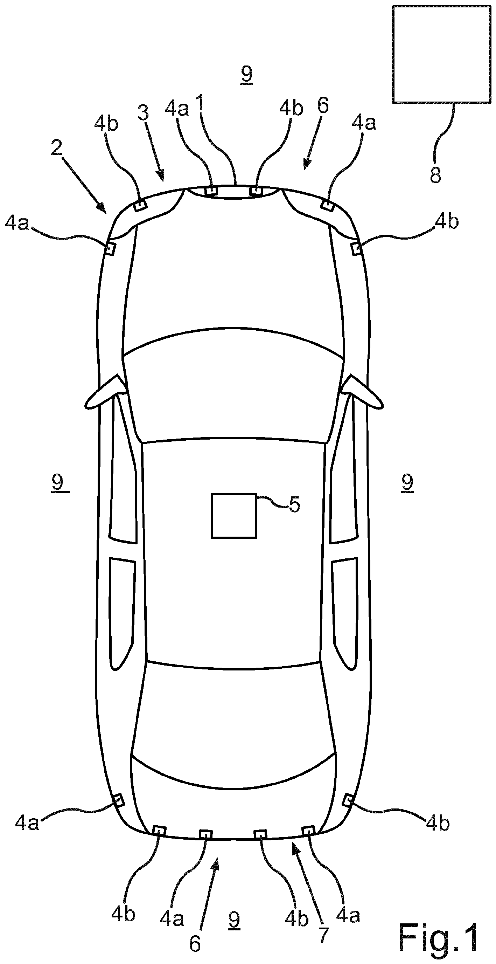

Fig. 1 zeigt ein Kraftfahrzeug 1 gemäß einer Ausführungsform der Erfindung in einer Draufsicht. Das Kraftfahrzeug 1 ist vorliegend als Personenkraftwagen ausgebildet. Das Kraftfahrzeug 1 umfasst ein Fahrerassistenzsystem 2, welches dazu dient, einen Fahrer beim Führen des Kraftfahrzeugs 1 zu unterstützen. Insbesondere kann das Fahrerassistenzsystem 2 als Parkhilfesystem ausgebildet sein, mittels welchem der Fahrer beim Einparken des Kraftfahrzeugs 1 in eine Parklücke und/oder beim Ausparken aus der Parklücke unterstützt werden kann.

Das Fahrerassistenzsystem 2 umfasst wiederum eine Ultraschallsensorvorrichtung 3. Die Ultraschallsensorvorrichtung 3 weist zumindest einen ersten Ultraschallsensor 4a und einen zweiten Ultraschallsensor 4b auf. In dem vorliegenden Ausführungsbeispiel umfasst die Ultraschallsensorvorrichtung 3 insgesamt zwölf Ultraschallsensoren 4a, 4b. Dabei sind sechs Ultraschallsensoren 4a, 4b in einem Frontbereich 6 des Kraftfahrzeugs 1 und sechs Ultraschallsensoren 4a, 4b in einem Heckbereich 7 des Kraftfahrzeugs 1 angeordnet. Vorliegend sind die ersten Ultraschallsensoren 4a und die zweiten Ultraschallsensoren 4b alternierend zueinander angeordnet. Die Ultraschallsensoren 4a, 4b können insbesondere an den Stoßfängern des Kraftfahrzeugs 1 montiert sein. Dabei können die Ultraschallsensoren 4a, 4b zumindest bereichsweise in entsprechenden Ausnehmungen beziehungsweise Durchgangsöffnungen der Stoßfänger angeordnet sein. Es kann auch vorgesehen sein, dass die Ultraschallsensoren 4a, 4b verdeckt hinter den Stoßfängern angeordnet sind. Grundsätzlich können die Ultraschallsensoren 4a, 4b auch an weiteren Verkleidungsteilen des Kraftfahrzeugs 1 angeordnet sein. Beispielsweise können die Ultraschallsensoren 4a, 4b an oder verdeckt hinter den Türen des Kraftfahrzeugs 1 angeordnet sein.

Mithilfe der jeweiligen Ultraschallsensoren 4a, 4b können Sensorsignale bereitgestellt werden, welche zumindest ein Objekt 8 in einem Umgebungsbereich 9 des Kraftfahrzeugs 1 beschreiben. Vorliegend ist schematisch ein Objekt 8 in dem Umgebungsbereich 9 gezeigt. Zum Bestimmen des Sensorsignals kann mit jedem der Ultraschallsensoren 4a, 4b ein Ultraschallsignal ausgesendet werden. Im Anschluss daran kann das von dem Objekt 8 reflektierte Ultraschallsignal wieder empfangen werden. Anhand der Laufzeit des Ultraschallsignals kann dann ein Abstand zwischen dem Ultraschallsensor 4a, 4b und dem Objekt 8 bestimmt werden. Es kann auch vorgesehen sein, dass die jeweiligen Abstände, die mit unterschiedlichen Ultraschallsensoren 4a, 4b bestimmt werden, berücksichtigt werden. Somit kann mittels Trilateration die relative Lage zwischen dem Kraftfahrzeug 1 und dem Objekt bestimmt werden.

Des Weiteren umfasst die Ultraschallsensorvorrichtung 3 ein elektronisches Steuergerät 5, welches mit den Ultraschallsensoren 4a, 4b zur Datenübertragung verbunden ist. Eine entsprechende Datenleitung ist vorliegend der Übersichtlichkeit halber nicht dargestellt. Auf diese Weise können von dem Steuergerät 5 die Sensorsignale von den Ultraschallsensoren 4a, 4b empfangen und ausgewertet werden. Diese Informationen können dann von dem Fahrerassistenzsystem 2 genutzt werden, um dem Fahrer des Kraftfahrzeugs 1 eine Ausgabe bereitzustellen. Zudem kann es vorgesehen sein, dass das Fahrerassistenzsystem 2 in eine Lenkung, ein Bremssystem und/oder einen Antriebsmotor eingreift, um das Kraftfahrzeug 1 in Abhängigkeit von dem erfassten Objekt 8 zumindest semi-autonom zu manövrieren.

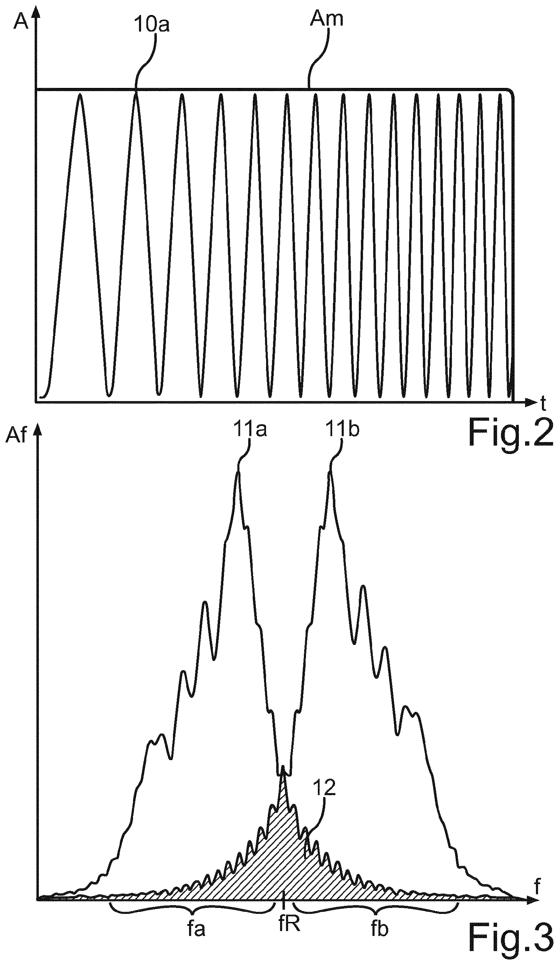

Mit dem Steuergerät 5 werden zudem Anregungssignale 10a bereitgestellt, mit denen die jeweiligen Ultraschallsensoren 4a, 4b angeregt werden. In Fig. 2 ist beispielhaft ein erstes Anregungssignal 10a für die ersten Ultraschallsensoren 4a dargestellt. Dabei ist auf der Abszisse die Zeit t und auf der Ordinate die Amplitude A aufgetragen. Das Anregungssignal 10a wird insbesondere in Form einer elektrischen Spannung bereitgestellt und an einem Wandlerelement des ersten Ultraschallsensors 4a angelegt. In Fig. 2 ist zu erkennen, dass es sich bei dem ersten Anregungssignal um ein frequenzmoduliertes Signal und insbesondere um einen Chirp handelt. Dies bedeutet, dass sich die Frequenz f des Anregungssignals 10a in Abhängigkeit von der Zeit t ändert. Vorliegend nimmt die Frequenz f des ersten Anregungssignals 10a in Abhängigkeit von der Zeit t linear zu. Das erste Anregungssignal 10a umfasst einen ersten Frequenzbereich fa, welcher unterhalb einer Resonanzfrequenz fR der Membranen der Ultraschallsensoren 4a, 4b liegt. Die zweiten Ultraschallsensoren 4b werden mit einem zweiten Anregungssignal angeregt. Das zweite Anregungssignal 10b umfasst einen zweiten Frequenzbereich fb, welcher oberhalb der Resonanzfrequenz fR liegt. Die Resonanzfrequenz der Membranen kann im Bereich von 50 kHz liegen. Bei dem zweiten Anregungssignal kann die Frequenz f ebenfalls linear erhöht werden. Somit kann es einen ähnlichen Verlauf wie das erste Anregungssignal 10b aber mit höheren Frequenzen aufweisen. Es kann auch vorgesehen sein, dass bei dem zweiten Anregungssignal die Frequenz f in Abhängigkeit von der Zeit t linear abnimmt.

Wie in Fig. 2 zu erkennen ist, weist eine maximale Amplitude Am des ersten Anregungssignals 10a einen konstanten Wert auf. Ferner weist das erste Anregungssignal 10a einen sinusförmigen Verlauf auf, wobei die Frequenz f in Abhängigkeit von der Zeit t linear erhöht wird. Der zeitliche Verlauf des ersten Anregungssignals 10a und des zweiten Anregungssignals kann nach folgender Formel bestimmt werden:

$$Y(t) = \sin(f(t) \cdot 2\pi \cdot t) \cdot Am.$$

Mit den ersten Ultraschallsensoren 4a wird ein erstes Ultraschallsignal ausgesendet. Hierzu werden die ersten Ultraschallsensoren 4a mit dem ersten Anregungssignal 10a angeregt. Mit den zweiten Ultraschallsensoren 4b wird ein zweites Ultraschallsignal ausgesendet. Hierzu werden die zweiten Ultraschallsensoren 4b mit dem zweiten Anregungssignal 10b angeregt. Hierzu zeigt Fig. 3 ein erstes Amplitudenspektrum 11a des ersten ausgesendeten Ultraschallsignals und ein zweites Amplitudenspektrum 11b des zweiten ausgesendeten Ultraschallsignals. Hier ist auf der Abszisse die Frequenz f und auf der Ordinate eine Amplitude Af aufgetragen. Aufgrund der Flanken der Anregungssignale 10a ergibt sich für die Ultraschallsignale im Spektralbereich eine Überlappung der Amplitudenspektren 11a, 11b. Vorliegend ist ein Bereich 12 gekennzeichnet, welcher die Überlappung der Amplitudenspektren 11a, 11b beschreibt. Aufgrund dieser Überlappung kann es zur Beeinflussung der von dem Objekt 8 reflektierten Ultraschallsignale kommen.

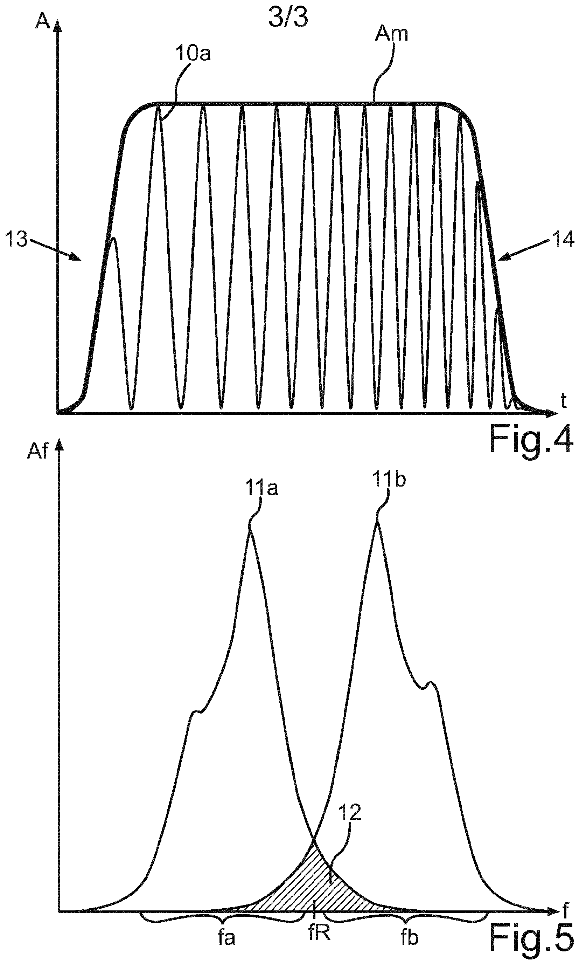

Im Vergleich hierzu zeigt Fig. 4 einen zeitlichen Verlauf eines zeitlichen Verlaufs eines ersten Anregungssignals 10a gemäß einer Ausführungsform der Erfindung. Hierbei ist zu erkennen, dass die maximale Amplitude Am des ersten Anregungssignals 10a Abhängigkeit von der Zeit t angepasst wird. Das erste Anregungssignal 10a weist einen steigenden Abschnitt 13 auf, welcher einem Beginn des Aussendens zugeordnet ist. Darüber hinaus weist das erste Anregungssignal 10a einen fallenden Abschnitt 14 auf, der dem Ende des Aussendens zugeordnet ist. Der fallende Abschnitt 14 ist ebenfalls der Resonanzfrequenz fR der Membran zugeordnet. Bei dem Anregungssignal 10a wird also der zeitliche Verlauf der maximalen Amplitude Am angepasst. Der zeitliche Verlauf des ersten Anregungssignals 10a kann mit folgender Formel beschrieben werden:

$$Y(t) = \sin(f(t) \cdot 2\pi \cdot t) \cdot Am(t).$$

In dem vorliegenden Beispiel weist die maximale Amplitude Am des ersten Anregungssignals 10a in dem steigenden Abschnitt 13 und in dem fallenden Abschnitt 14 den Verlauf einer Sigmoidfunktion auf. Der zeitliche Verlauf der maximalen Amplitude Am des zweiten Anregungssignals kann den gleichen Verlauf aufweisen. Hierdurch weisen die Anregungssignale an den steigenden Abschnitten 13 und insbesondere an den fallenden Abschnitten 14 eine definierte Steigung beziehungsweise Flanke auf. Auf diese Weise kann die Aufweitung der ausgesendeten beziehungsweise empfangenen Ultraschallsignale im Frequenzbereich deutlich reduziert werden. Insbesondere kann der Bereich 12, welcher die Überlappung der Amplitudenspektren 11a, 11b im Bereich der Resonanzfrequenz beschreibt, deutlich verkleinert werden. Dies ist in Fig. 5 zu erkennen, welche die Amplitudenspektren 11a, 11b der Ultraschallsignale zeigt. Hier wurden die Ultraschallsensoren 4a, 4b mit den Anregungssignalen 10a angeregt, bei welchen der zeitliche Verlauf der maximalen Amplituden Am angepasst wurde.

**Patentansprüche**

1. Verfahren zum Betreiben einer Ultraschallsensorvorrichtung (3) für ein Kraftfahrzeug (1), bei welchem eine Membran eines ersten Ultraschallsensors (4a) zum Aussenden eines ersten Ultraschallsignals mit einem frequenzmodulierten ersten Anregungssignal (10a) angeregt wird und eine Membran eines zweiten Ultraschallsensors (4b) zum Aussenden eines zweiten Ultraschallsignals mit einem frequenzmodulierten zweiten Anregungssignal angeregt wird, wobei die Membran des ersten Ultraschallsensors (4a) und die Membran des zweiten Ultraschallsensors (4b) die gleiche Resonanzfrequenz (fR) aufweisen,
**dadurch gekennzeichnet, dass**
das erste Anregungssignal (10a) einen ersten Frequenzbereich (fa) umfasst und das zweite Anregungssignal einen von dem ersten Frequenzbereich (fa) verschieden, zweiten Frequenzbereich (fb) umfasst, wobei ein zeitlicher Verlauf einer maximalen Amplitude (Am) des ersten Anregungssignals (10a) und ein zeitlicher Verlauf einer maximalen Amplitude (Am) des zweiten Anregungssignals verändert werden.

2. Verfahren nach Anspruch 1,
**dadurch gekennzeichnet, dass**
das erste Anregungssignal (10a) und das zweite Anregungssignal als Chirp bereitgestellt werden.

3. Verfahren nach Anspruch 1 oder 2,
**dadurch gekennzeichnet, dass**
der erste Frequenzbereich (fa) unterhalb der Resonanzfrequenz (fR) liegt und der zweite Frequenzbereich (fb) oberhalb der Resonanzfrequenz (fR) liegt.

4. Verfahren nach einem der vorhergehenden Ansprüche,
**dadurch gekennzeichnet, dass**
sich das erste Anregungssignal (10a) und das zweite Anregungssignal (10b) jeweils von einem steigenden Abschnitt (13) zu einem fallenden Abschnitt (14), welcher der Resonanzfrequenz (fR) zugeordnet ist, erstrecken, wobei die maximale Amplitude (Am) des ersten Anregungssignals (10a) und die maximale Amplitude (Am) des zweiten Anregungssignals in dem fallenden Abschnitt (14) reduziert werden.

5. Verfahren nach Anspruch 4,
   **dadurch gekennzeichnet, dass**
   die maximale Amplitude (Am) des ersten Anregungssignals (10a) und die maximale Amplitude (Am) des zweiten Anregungssignals in dem steigenden Abschnitt (13) reduziert werden.

6. Verfahren nach Anspruch 4 oder 5,
   **dadurch gekennzeichnet, dass**
   der zeitlicher Verlauf der maximalen Amplitude (Am) des ersten Anregungssignals (10a) und der maximalen Amplitude (Am) des zweiten Anregungssignals in dem fallenden Abschnitt (14) und/oder in dem steigenden Abschnitt (13) eine Sigmoidfunkion beschreibt.

7. Verfahren nach einem der vorhergehenden Ansprüche,
   **dadurch gekennzeichnet, dass**
   die Membran des ersten Ultraschallsensors (4a) und die Membran des zweiten Ultraschallsensors (4b) gleichzeitig angeregt werden.

8. Verfahren nach einem der vorhergehenden Ansprüche,
   **dadurch gekennzeichnet, dass**
   das von einem Objekt (8) in einem Umgebungsbereich (9) des Kraftfahrzeugs (1) reflektierte erste Ultraschallsignal und/oder zweite Ultraschallsignal mit dem ersten Anregungssignal (10a) und/oder dem zweiten Anregungssignal korreliert wird.

9. Verfahren nach einem der vorhergehenden Ansprüche,
   **dadurch gekennzeichnet, dass**
   zusätzlich zumindest eine Membran eines dritten Ultraschallsensors zum Aussenden eines dritten Ultraschallsignals mit einem frequenzmodulierten dritten Anregungssignal angeregt wird.

10. Ultraschallsensorvorrichtung (3) für ein Kraftfahrzeug (1), mit einem ersten Ultraschallsensor (4a), mit einem zweiten Ultraschallsensor (4b) und mit einem Steuergerät (5), wobei die Ultraschallsensorvorrichtung (3) zum Durchführen eines Verfahrens nach einem der vorhergehenden Ansprüche ausgelegt ist.

11. Fahrerassistenzsystem (2) für ein Kraftfahrzeug (1) mit einer Ultraschallsensorvorrichtung (3) nach Anspruch 12.

12. Kraftfahrzeug (1) mit einem Fahrerassistenzsystem (2) nach Anspruch 11.

Fig.1

Fig.2

Fig.3

Fig.4

Fig.5

Europäisches Patentamt

European Patent Office

Office européen des brevets

## EUROPÄISCHER RECHERCHENBERICHT

Nummer der Anmeldung

EP 18 18 8809

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 101 06 142 A1 (VALEO SCHALTER & SENSOREN GMBH [DE]) 14. August 2002 (2002-08-14) * Zusammenfassung *; Abbildungen 1-8c * * Spalte 1, Zeile 3 - Spalte 7, Zeile 53 * ----- | 1-12 | INV. G01S15/10 G01S15/93 G01S7/524 |
| Y | WO 02/45998 A2 (SMARTBUMPER INC [US]; HASAN UMRAAN [US]; MADALA SRIDHAR [US]; RAJGOPAL) 13. Juni 2002 (2002-06-13) * Zusammenfassung *; Abbildungen 1-4, 17-20 * * Seite 1, Zeile 6 - Zeile 14 * * Seite 2, Zeile 6 - Zeile 29 * * Seite 4, Zeile 26 - Seite 5, Zeile 28 * * Seite 16, Zeile 20 - Seite 17, Zeile 32 * ----- | 1-12 | |
| A | US 2004/039283 A1 (BANJANIN ZORAN [US] ET AL) 26. Februar 2004 (2004-02-26) * Absatz [0001] * * Absatz [0014] * * Absatz [0018] * * Absatz [0029] - Absatz [0032] * ----- | 1-12 | |

RECHERCHIERTE SACHGEBIETE (IPC)

G01S

Der vorliegende Recherchenbericht wurde für alle Patentansprüche erstellt

| Recherchenort | Abschlußdatum der Recherche | Prüfer |
|---|---|---|
| München | 12. Dezember 2018 | Zaneboni, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 18 8809

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-12-2018

| Im Recherchenbericht angeführtes Patentdokument | Datum der Veröffentlichung | Mitglied(er) der Patentfamilie | Datum der Veröffentlichung |
|---|---|---|---|
| DE 10106142 A1 | 14-08-2002 | DE 10106142 A1<br>EP 1231481 A2 | 14-08-2002<br>14-08-2002 |
| WO 0245998 A2 | 13-06-2002 | AU 2885702 A<br>WO 0245998 A2 | 18-06-2002<br>13-06-2002 |
| US 2004039283 A1 | 26-02-2004 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011120447 A1
- DE 102013211846 A1